# EUROPÄISCHE PATENTSCHRIFT

(11) **EP 2 303 028 B1**
(45) Veröffentlichungstag und Bekanntmachung des Hinweises auf die Patenterteilung: **26.03.2014**
(21) Anmeldenummer: 08760316.3
(22) Anmeldetag: 31.05.2008
(51) Int. Cl.: A21D 13/00, A21D 15/00

(54) **VERFAHREN ZUR HERSTELLUNG EINES SNACKS UND EIN SNACK**
METHOD FOR THE PRODUCTION OF A SNACK, AND A SNACK
PROCEDE POUR PRODUIRE UN ALIMENT DE GRIGNOTAGE ET ALIMENT DE GRIGNOTAGE AINSI PRODUIT

(30) Priorität: 16.06.2007 DE 102007027790
(43) Veröffentlichungstag der Anmeldung: 06.04.2011
(73) Patentinhaber: Kott, Werner, 77933 Lahr/Schwarzwald (DE)
(72) Erfinder: KOTT, Rudolf, 77933 Lahr/schwarzwald (DE)
(74) Vertreter: Küchler, Stefan
(86) Internationale Anmeldenummer: PCT/EP2008/056729
(87) Internationale Veröffentlichungsnummer: WO 2008/155207

(56) Entgegenhaltungen:
- EP-A- 1 676 481
- DE-A1- 2 508 026
- FR-A- 2 522 933
- FR-A- 2 743 698
- US-A- 2 029 664
- US-A- 4 721 622
- US-A- 5 897 900
- US-B1- 6 231 898

## Beschreibung

Die Erfindung betrifft ein Verfahren zur Herstellung eines Snacks und einen Snack nach dem Oberbegriff der Ansprüche.

Snacks die einen Belag in einem Brotteig darstellen, sind bekannt.

Es ist bekannt, Brot in bestimmten Formen zu backen, um sie als essbare Teller zu benutzen, wie in dm DE 25 08 026 A1 offenbart. Da sie bis zum Servieren keine Berührung mit Esswaren besitzen, können sie längere Zeit gelagert werden. Ein derartiger Snack ist auch aus der US 1 726 946 bekannt. Zwei schalenförmige Teile, die an einer Längsseite miteinander verbunden sind, werden mit einer Füllung versehen und dann übereinandergeklappt. Der fertige Snack ist zum sofortigen verzehr bestimmt und für eine Bevorratung völlig ungeeignet.

Ebenfalls nicht für die Bevorratung geeignet ist ein halbfertiges Produkt mit einer Wurstfüllung gemäß EP 0 875 158 A2, das erst kurz vor dem Verzehr fertiggestellt wird. Die Füllung wird bei der Fertigstellung des Snacks thermisch belastet, was in jedem Fall zu einer Minderung des fertigen Produkts führt. Dieser Snack kann also nicht auf einer Reise mitgeführt werden. Eine Aufbewahrung kann nur tiefgekühlt erfolgen.

Aus der DE 24 28 699 C3 wird eine Lösung bekannt, bei der Schokolade und andere Süßwaren, die einen süßen Kern aus Fruchtpulpe enthalten können, mit einer Backhülle aus Brot umgeben sind.

In der DE 25 14 163 wird ein Brothohlkörper vorgestellt, in den eine Füllung injiziert oder zwischengelegt wird. Die Haltbarkeit bzw. Lagerfähigkeit hängt stark von der Art der Füllung ab. Sollte eine Füllung mit Fleischwaren und/oder Käse vorgesehen werden, ist nur bei Verwendung von Schmelzkäse ein Verbund des Snacks gewährleistet. Bei festen Füllungen aus Wurst oder Schnittkäse würden die einzelnen Teile beim Verzehr auseinanderfallen. Es ist deshalb vorzugsweise eine süße Füllung angegeben.

Die Lösung der DE 25 56 254 zeigt eine Zwischenmahlzeit auf Brotbasis, die aus einer dauerhaften Brotmasse besteht, die höchstens 15 % Wasser enthält, und die auf der Innenseite einen wasserunlöslichen, essbaren Film besitzen kann, der der Bindefähigkeit der Zwischenmahlzeit dienen soll. Für die Zwischenmahlzeit sind süße, feste Füllungen vorgesehen.

Aus der DE 83 17 099 U1 ist ein Snack bekannt, bei dem poröse obere und untere Gebäckscheiben extrudiert und nachgetrocknet werden. Zwischen die Gebäckscheiben wird ein flacher Brätstrang eingelegt. Bei diesem Snack bleibt der Wurstbrät mit der Außenluft in Berührung, so dass der Dauerwurstbrät nachreifen kann. Dieser Snack besitzt den entscheidenden Nachteil, dass das Fett der Wurst von den Gebäckscheiben aufgesaugt wird, so dass die Gebäckscheiben nach einiger Zeit den Wurstgeschmack angenommen haben und aufgeweicht sind und die Wurst hart ist. Bei einer längeren Lagerung muss dieses Produkt außerdem gekühlt werden, da es nur eine geringe Haltbarkeitsdauer besitzt.

Deshalb werden solche Snacks häufig in eine Verpackung unter Schutzgas eingeschlossen, um die Haltbarkeitsdauer zu verlängern. Die bereits dargestellte Veränderung wird dadurch jedoch nicht verhindert.

Ebenfalls unter Schutzgas eingeschweißt wird ein Knäckebrot-Snack angeboten, bei dem zwischen zwei Knäckebrotscheiben eine Käsescheibe eingelegt ist. Dieses Produkt kann allerdings nur mit eine Schmelzkäseeinlage hergestellt werden, da andere Einlagen, wie Schnittkäse oder Dauerwurst den Snack nicht dauerhaft verbinden würde.

Aus dem EP 0 399 995 ist ein Verfahren bekannt, mit dem ein geformtes, zuckerfreies oder zuckerarmes Backwerk hergestellt werden kann. Grundlage ist ein flüssiger Teig aus Vollkornmehl, Lecithin und Erdnussöl, der zu Blättern gebacken und mit einer Eiweißlösung flexibel gemacht wird, um Formkörper-Gebäck herzustellen. Die Formkörper werden danach mit einer Masse aus Käsepulver und Fett gefüllt. Das insgesamt sehr fette Formkörper-Gebäck wird in einem aufwendigen Verfahren hergestellt. Es entspricht nicht den Erfordernissen einer gesunden Ernährung.

US 6 231 898 B1 offenbart einen Snack aus einer Brotscheibe und einer Füllung, dadurch gekennzeichnet, dass die Brotscheibe an einer Längskante um die Füllung geschlagen wird.

EP 1 676 481 offenbart einen Snack aus zwei Brotscheiben und einer Füllung, dadurch gekennzeichnet dass die Füllung vollständig von die zwei Brotscheiben umschlossen ist, mit Verwendung einer Presse.

US 5 897 900 offenbart ein längliches Brötchen, indem eine Form mit einem Teig ausgekleidet wird, der unten dicker ist als oben, und die Oberkanten des Teigs werden innerhalb der Form - also vor dem Backen - nach innen umgeschlagen. Das Brötchen wird mitsamt der eingelegten Füllung in einer Form gebacken.

US 4 721 622 offenbart einen Snack aus geformten vorgebackenen Teig und einer Füllung, dadurch gekennzeichnet dass eine Längskante dem geformten vorgebackenen Teig um die Füllung geschlagen wird und der gefüllten Teig aufgebackenen wird. Der fertige Snack ist in einer Folie unter Schutzgas (N₂ oder CO₂) eingeschweißt.

Es ist deshalb die Aufgabe der vorliegenden Erfindung ein Verfahren und einen Snack, der mit dem Verfahren hergestellt wird, vorzuschlagen, bei dem der Nachteil des Standes der Technik beseitigt wird.

Diese Aufgabe wird durch die Merkmale des Hauptanspruchs gelöst.

Das Verfahren zur Herstellung eines Snacks mit einer Brotscheibe, besitzt die Schritte
a) Ausformen einer dünnen flachen Scheibe aus einem Brotteig, der eine Körnung von maximal 3 mm besitzt;
b) Durchbacken der dünnen flachen Scheibe, so dass der Restwassergehalt 10 bis 15% beträgt;
c) Bedampfen der durchgebackenen dünnen flachen Scheibe mit Wasserdampf von maximal 140 °C bis die Scheibe geschmeidig ist;
d) Aufbiegen der Längskanten der geschmeidigen Scheibe zu einer U-Form;
e) Einlegen einer Füllung in die U-Form der geschmeidigen Scheibe;
f) Umlegen der Längskanten der geschmeidigen Scheibe um die Füllung, so dass die Füllung umschlossen ist und nicht herausfallen kann;
g) Einschweißen des Snacks in eine Folie unter Schutzgas.

Die ausgebackene Brotscheibe nimmt die Füllung vollständig auf. Dieses Verfahren garantiert, dass der Nachteil des Standes der Technik beseitigt wird. Die Füllung liegt lagesicher in der Brotscheibe und verbleibt auch nach dem Öffnen der Folie in der Brothülle. Der Snack bleibt bis zum vollständigen Verzehr als Einheit aus Brot und Füllung erhalten. Wird die mit Schutzgas, vorzugsweise Kohlenstoffdioxid gefüllte Folie, geöffnet, verbleibt die Füllung in der Brotscheibe und der Snack kann in einem hohen Frischezustand verzehrt werden.

Die Brotscheibe kann vorzugsweise ein Weißbrot, Vollkornbrot oder Knäckebrot darstellen, die bereits vor dem Einlegen der Füllung vollständig ausgebacken ist. Die Füllung kann aus einer Speckscheibe, Wurst oder einem Käse bestehen.

Die Erfindung soll nachfolgend an Ausführungsbeispielen näher erläutert werden.

### 1. Beispiel

Zur Herstellung eines Snacks wird zunächst eine dünne flache Scheibe aus einem Brotteig, der eine Körnung von maximal 3 mm besitzt, ausgeformt. Diese dünne flache Scheibe wird durchgebacken, so dass der Restwassergehalt 10 bis 15 % beträgt. Die dünne flache Scheibe wird mit Wasserdampf von maximal 140 °C bedampft, bis die Scheibe geschmeidig ist. Die Längskanten der geschmeidigen Scheibe werden nach oben gebogen, so dass die dünne flache Scheibe eine U-Form erhält, die zur Aufnahme der Füllung geeignet ist. Diese Füllung besteht in diesem Ausführungsbeispiel aus einer darmlosen Dauerwurst. Die Längskanten der noch geschmeidigen Scheibe werden dann so um die Füllung gelegt, dass die Füllung umschlossen ist und nicht herausfallen kann. Zum Schutz wird der Snack in eine Folie unter Schutzgas eingeschweißt. Dieser Snack besitzt selbst nach einer längeren Lagerzeit noch vorhandene Rösche, deren Biss- und Kaueigenschaft ausgesprochen vorteilhaft ist und sich gegen bekannte Kombinationsprodukte abhebt.

### 2. Beispiel

Es wird eine größere dünne Platte aus einem Knäckebrotteig maschinell gewalzt und in herkömmlicher Weise knusprig durchgebacken. Die Platte aus Knäckebrot wird mit Wasserdampf von maximal 140 °C bedampft, bis die Platte geschmeidig ist. Die Platte wird dann in Stücke geschnitten, die der Größe des herzustellenden Snacks entspricht und an den Längskanten nach unten gebogen. Die u-förmigen Knäckebrotscheiben werden über die Füllung, einem mit Speck umwickelten Käsestreifen gelegt und die Längskanten der Knäckebrotscheibe werden vollständig um die Füllung gelegt. Danach wird der fertige Snack in eine Folie unter Schutzgas eingeschweißt. Das ernährungsphysiologisch wertvolle Getreideprodukt entspricht dem modernen Ernährungsbewusstsein. Das Produkt besitzt eine große mikrobiologische Stabilität. Die ausreichend trockenen Produkteigenschaften und das Unterbinden der Autooxidation, insbesondere der Fleischprodukte, durch eine geeignete Verpackung sichert einen hochwertigen Snack.

## Patentansprüche

1. Verfahren zur Herstellung eines Snacks aus einer Brotscheibe, mit den Schritten
a) Ausformen einer dünnen flachen Scheibe aus einem Brotteig, der eine Körnung von maximal 3 mm besitzt;
b) Durchbacken der dünnen flachen Scheibe, so dass der Restwassergehalt 10 bis 15 % beträgt;
c) Bedampfen der durchgebackenen dünnen flachen Scheibe mit Wasserdampf von maximal 140 °C bis die Scheibe geschmeidig ist;
d) Aufbiegen der Längskanten der geschmeidigen Scheibe zu einer U-Form;
e) Einlegen einer Füllung in die U-Form der geschmeidigen Scheibe;
f) Umlegen der Längskanten der geschmeidigen Scheibe um die Füllung, so dass die Füllung vollständig umschlossen ist und nicht herausfallen kann;
g) Einschweißen des Snacks in eine Folie unter Schutzgas.

2. Snack aus einer dünnen, flachen, durchgebackenen und anschließend mit Wasserdampf von maximal 140 °C bis zur Geschmeidigkeit bedampften Scheibe aus einem Brotteig mit einer Körnung von maximal 3 mm und einer Füllung, hergestellt nach dem Verfahren gemäß Anspruch 1, wobei die vor dem Einlegen der Füllung zu einer U-Form aufgebogenen Längskanten der geschmeidigen Brotscheibe um die eingelegte Füllung umgelegt sind, so dass die Füllung von der vorher ausgebackenen Brotscheibe vollständig umschlossen ist und nicht herausfallen kann, und wobei schließlich der Snack in einer Folie unter Schutzgas eingeschweißt ist.

3. Snack nach Anspruch 2, **dadurch gekennzeichnet, dass** die Brotscheibe ein Weißbrot, Vollkornbrot oder Knäckebrot darstellt.

4. Snack nach Anspruch 2 oder 3, **dadurch gekennzeichnet, dass** die Füllung aus einer Wurst, Speck oder einem Käse besteht.

## Claims

1. Method fort he production of a snack from a slice of bread, with the following steps:
a) shaping of a thin, flat slice of a bread dough having a grain size of maximally 3 mm;
b) baking the thin, flat slice right through so that the residual water contents is between 10 to 15 %;
c) steaming the baked through, thin, flat slice with steam of maximally 140 °C, until the slice is flexible;
d) bending the longitudinal edges of the flexible slice up into an U-shape;
e) inserting a stuffing into the U-shape of the flexible slice;
f) laying the longitudinal edges of the flexible slice down around the stuffing so that the stuffing is entirely surrounded and cannot drop out;
g) shrink-wrapping the snack in a foil under inert gas.

2. Snack made according to the method of claim 1 from a thin, flat slice of bread dough with a grain size of maximally 3 mm, which is baked right through and subsequently steamed with steam of maximally 140 °C up to flexibility, and from a stuffing, whereby the longitudinal edges of the flexible slice of bread, which are bended up into an U-shape before insertion of the stuffing, are laid around the inserted stuffing so that the stuffing is entirely surrounded by the previously baked through slice of bread and cannot drop out, and whereby finally the snack is shrinkwrapped in a foil under inert gas.

3. Snack according to claim 2, **characterized in that** the slice of bread is a white bread, a granary bread or a crisp bread.

4. Snack according to claim 2 or 3, **characterized in that** the stuffing consists of a sausage, bacon or a cheese.

## Revendications

1. Procédure à la fabrication d'un casse-croûte d'un disque de pain, avec les mesures suivantes:
a) Former une mince tranche plate à base d'une pâte de pain qui possède au maximum un grainage de 3 mm;
b) cuire au four la mince tranche plate de sorte que le teneur en eau résiduel se lève à 10 à 15%;
c) traiter la mince tranche plate à la vapeur d'eau d'au maximum 140 °C jusqu'à ce que la tranche soit souple;
d) courber les bords longitudinales de la tranche souple à une forme d'un U;
e) insérer un remplissage en forme d'un U à la tranche souple;
f) plier les bords longitudinales de la tranche souple autour du remplissage ainsi que le remplissage soit entouré complètement et ne puisse pas tomber;
g) emballer le casse-croûte dans un film sous un gaz de protection.

2. Casse-croûte faite d'une mince tranche plate d'une pâte de pain avec un grainage d'au maximum 3 mm, qui est d'abord cuite au four et, ensuite traitée au vapeur d'eau d'au maximum 140°C jusqu'à ce que la tranche soit souple; puis cette tranche est faite selon le procédé de la revendication 1, dont, avant introduire le remplissage les bords longitudinales de la tranche souple de pain sont courbés en forme d'un U et autour duquel le remplissage introduit ainsi que le remplissage soit entouré complètement par la tranche de pain cuite au four de sorte qu'elle ne puisse pas tomber, le casse-croûte prêt est finalement soudé dans une feuille sous le gaz de protection.

3. Casse-croûte selon revendication 2, characterisé en ce que la tranche de pain est un pain blanc, un pain complet ou un pain suédois.

4. Casse-croûte selon revendication 2 ou 3, charactérisé en ce que le remplissage se compose d'un saucisse, de lard ou de fromage.
